# EUROPEAN PATENT SPECIFICATION

(11) **EP 0 662 981 B1**
(45) Date of publication and mention of the grant of the patent: **04.06.1997**
(21) Application number: 93917696.2
(22) Date of filing: 29.07.1993
(51) Int. Cl.: C08G 18/46, D06N 3/14

(54) **NON-WOVEN MICROFIBROUS SUEDE FABRIC AND PROCESS FOR ITS PREPARATION**
MIKROFASRIGER, WILDLEDERÄHNLICHER VLIESSTOFF UND VERFAHREN ZU SEINER HERSTELLUNG
TISSU IMITATION DAIM MICROFIBREUX NON TISSE ET SON PROCEDE DE PRODUCTION

(30) Priority: 06.08.1992 IT MI921945; 23.12.1992 IT MI922944
(43) Date of publication of application: 19.07.1995
(73) Proprietor: ALCANTARA S.p.A., 20138 Milano (IT)
(72) Inventor: BORRI, Carlo, I-50129 Firenze (IT); CASCELLA, Ciro Via Vecchia Communale di Miano, 2, I-80144 Napoli (IT); PIERMATTEI, Alessandro, I-60041 Sassoferrato (IT); SERPE, Luigi, I-CAPRIGLIA IRPINA (Avellino) (IT)
(74) Representative: Cioni, Carlo
(86) International application number: EP9302028
(87) International publication number: WO9403514

(56) References cited:
- EP-A- 0 082 013
- DE-A- 957 564
- FR-A- 1 410 546
- FR-A- 2 327 264
- GB-A- 1 186 649
- GB-A- 2 105 734
- CHEMICAL ABSTRACTS, vol. 110, no. 8, 20 February 1989, Columbus, Ohio, US; abstract no. 58786, ITO ET AL 'MANUFACTURE OF POLYURETHANES RESISTANT TO LIGHT AND NITROGEN OXIDES' & JP,A,63 154 720 (...)
- CHEMICAL ABSTRACTS, vol. 110, no. 8, 17 April 1989, Columbus, Ohio, US; abstract no. 136939, ITO ET AL 'MANUFACTURE OF POLYURETHANES WITH IMPROVED INITIAL COLOR DEVELOPMENT AND PROLONGED COLOR STABILITY' & JP,A,63 154 721 (...)
- CHEMICAL ABSTRACTS, vol. 110, no. 8, 20 February 1989, Columbus, Ohio, US; abstract no. 58786, ITO ET AL 'MANUFACTURE OF POLYURETHANES RESISTANT TO LIGHT AND NITROGEN OXIDES' ; & JP-A-63 154 720
- CHEMICAL ABSTRACTS, vol. 110, no. 8, 17 April 1989, Columbus, Ohio, US; abstract no. 136939, ITO ET AL 'MANUFACTURE OF POLYURETHANES WITH IMPROVED INITIAL COLOR DEVELOPMENT AND PROLONGED COLOR STABILITY' ; & JP-A-63 154 721

## Description

### Technical Field

The present invention relates to a microfibrous synthetic non-woven fabric of the suede type with improved dying characteristics, and a procedure for its preparation.

### Background Art

A method is already known for the production of a synthetic microfibrous non-woven fabric which consists, essentially, of the preparation of a matrix of substrate of polyethylene terephthalate or polyamide-6 and the application to this of a polyurethane elastomer to form a microfibrous composite sheet, which is subjected to buffing and dying treatments. The above procedure is reported, for instance, in Italian Patent Nos. 823055, 839921, 858373, 873699, 905222, 921871 and U.S. Patent Nos. US-A-3531368 e US-A-3889292, to which reference may be made for a fuller description.

### Disclosure of the invention.

The process used currently for dying this material involves only the polyester based microfibres which are in a velour form. The other component, polyurethane, retains its original colour (white or grey, depending on the amount of carbon black added) as it is not coloured by the dyes used for the polyethylene terephthalate.

Generally, the density of the fibre and the surface hair are sufficient to cover the "undersurface" of polyurethane, so there is no problem for soft-colours. Certain bright colours (reds, greens, turquoise, etc.) are not produced because, despite working with materials with a high density of fibres, the surface hair does not cover the "undersurface" and the colour of the polyurethane is visible as in the forms of small spots (light or dark) which are found in the colour of the fibre. This phenomenon is called specking.

Another disadvantage is the fact that it is necessary to use a polyurethane that is loaded with greater or less quantities of pigment according to the hair color. This method means that different stocks of raw material must be held, i.e. white and various tones of grey, and causes further notable increases in process time and costs since the production line has to be cleaned at every change of polyurethane grey.

The object of the present invention is to solve the above mentioned problems by means of a new type of microfibrous fabric with better dying qualities.

The object is achieved by means of the present invention which concerns a synthetic microfibrous non-woven fabric, of the suede-like type, consisting of a portion of microfibres impregnated with a matrix of polyurethane polymer, characterized by the polyurethane polymer having a linear chain structure, being soluble in organic solvents and having a plurality of tertiary amine groups of the formula 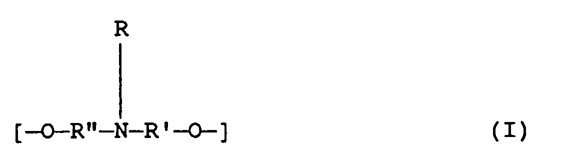 where R is an C₁-C₄ alkyl and R' and R", equal or alike, are alkylenes C₁-C₄.

The invention also concerns a method for the preparation of a non-woven fabric of the type described above, comprising the steps of separately preparing of a matrix of microfibres and polyurethane polymer solution and dying the final raw product, characterized in that said polyurethane polymer is prepared by inserting in the relative chain a plurality of tertiary amine units of formula (I) above.

GB-A-1 186 649 discloses curable polyurethane coatings for non-woven fabrics containing tertiary amine and their preparation.

FR-A-1 410 546 discloses non-linear polyurethane coatings for clothes containing tertiary amine and their preparation.

DE-A-0 957 564 discloses a method to coat textiles with crosslinked polyurethanes.

As will be described in more detail below, the new non-woven fabric according to the invention presents an improved facility for binding the dyes which results into the possibility of a single dying operation giving uniform tone on tone colouring and improved light and washing fastness. Further, the said improved binding ability enables considerable savings in the quantity of colourant used in the dying operation with the obvious economic and environmental advantages that that entails.

According to a preferred aspect of the invention, if the synthetic suede consists of a mat of polyester microfibres, dying can be done in a single bath containing pre-metalized acid colourants (or alternatively reactive colourants) and dispersed colourants. If instead the microfibres are polyamide, only the pre-metalized acid colourants or alternatively reactive colourants are used in the bath.

### Best mode for carrying out the invention

The method for the preparation of a synthetic microfibrous non-woven fabric according to the present invention comprises the application of an elastomeric polyurethane polymer to a microfibrous non-woven fabric of polyethylene terephthalate or of polyamide-6 in which the polyurethane polymer is the product of the reaction between an extender of the diamine chain, aromatic or aliphatic, and a isocyanate pre-polymer. The word polyurethane polymer here means a polymer of the polyurethane-polyurea type, which presents simultaneously urethane and urea bonds.

Alternatively, the prepolymer can be extended with water, as reported in the Italian application for Patent N° MI92A001945 in the name of the present applicant, and to which reference will be made here for a more complete description.

The polyurethane polymer according to the present invention has in its chain a plurality of recurring units corresponding to a tertiary amine group according to the formula (1) above. Such amine units are inserted into the polyurethane polymer during its synthesis, at the level of the prepolymer to be extended.

The prepolymer can be obtained in two ways. According to a first method, it is obtained from an organic diisocyanate R'''(NCO)₂, aromatic or aliphatic, which is made to react directly with a tertiary dihydroxylamine of the formula : 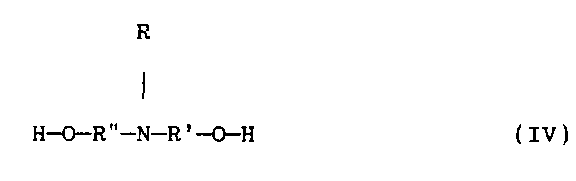 where R, R', and R" have the same meaning as above, with the formation of urethane bonds and recurring units of the formula : 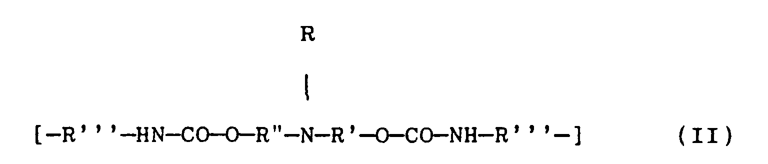 where R"' is the aromatic or aliphatic group of the diisocyanate.

In a second method the prepolymer is obtained by reacting aromatic or aliphatic diisocyanate R'''(NCO)₂ with a mixture of polyether diol and polyester diol, the latter being obtained from the reaction between a dihydroxylamine of formula (IV) and an aliphatic bicarboxylic acid C₂-C₈ with the formation of ester bonds according to recurring unit of formula 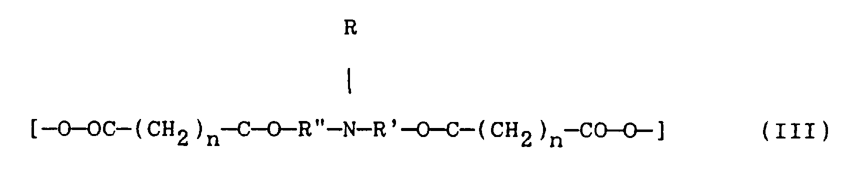 wherein R, R', and R" have the same meaning as above, and n can be from 0 to 6.

Preferably, adipic acid (C₆) and N-methyl-diethanolamine are used. The hydroxy groups at the ends of polyester diol chains with formula (III) are obtained by the presence of further tertiary dihydroxylamine (IV) units or by means of glycol units of a type already known in this branch of technology, for instance, those of formula OH(CH₂)ₙOH, where n is an integer from 2 to 4.

The polyurethanes obtained from polyester diols of this type are a useful intermediate for the production of non-woven fabric according to the invention and are therefore a further object/of the same.

Independently of how the tertiary amine unit is inserted into the polyurethane, the tertiary amine percentage by weight of the dry polyurethane polymer is between 5 and 15%.

As will be described in more detail in the following examples, increasing the number of tertiary amine units in the polyurethane reduces the dye amount required for bath dying the product.

The microfibrous non-woven fabric of polyethylene terephthalate or polyamide-6 can be economically obtained in the following way. First, a staple fibre is prepared from polyethylene terephthalate or polyamide-6 microfibres (islands) with 0.01 to 0.04 denier or preferably 0.08 to 0.15 denier in a matrix (sea) of polystyrene or of styrene copolymer. In more detail the said staple fibre has the following characteristics:
1.4 to 10 denier or preferably 3.4 to 3.8 denier; from 4 to 15 crimps per cm; draft ratio of 2/1 to 5/1.

Furthermore, the staple fibre, i.e. the plurality of filaments, can contain 50-80 parts by weight of polyethylene terephthalate or polyamide-6 or polyamide 6-6, 20-50 parts by weight of polystyrene matrix and about three parts by weight of polyethylene glycol, the latter trapped within the polystyrene matrix.

A raw felt is prepared from this staple fibre which is then needle punched to form a punched felt with a density in the order of 0.15 - 0.35 g/cm². The punched felt is then immersed in a 20% by weight aqueous solution of polyvinyl alcohol, and after drying, is immersed in a chlorinated hydrocarbon such as trichloroethylene or perchloroethylene until substantially complete dissolution of the polystyrene matrix. The resulting product is then dried and constitutes the microfibre base of polyethylene terephthalate and polyamide-6, to which the elastomeric polyurethane is applied.

According to the present invention, the said polyurethane elastomer is the product of the reaction between a chain -extender as defined above, and a prepolymer with isocyanate chain ends obtained from a diisocyanate R'''(NCO)₂ in above reported way.

Diisocyanates suitable for this purpose are those known in the art and normally used in the preparation of synthetic microfibrous non-woven fabrics.

Of these, the most preferred is 4,4'-diphenyl-methane-diisocyanate (V) and 4,4'-dicyclohexylmethane-diisocyanate:

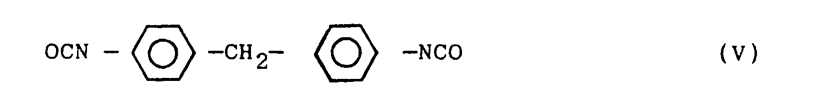

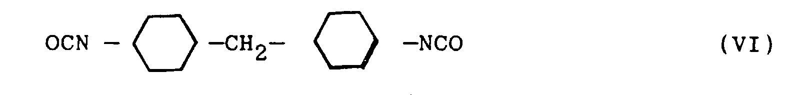

Another preferred aliphatic diisocyanate is a cyclohexyl derivative of formula

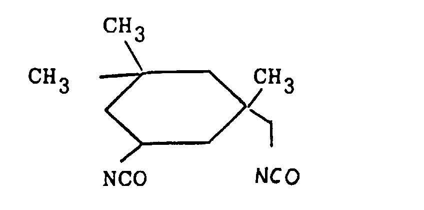

The suitable polyethers and polyesters have a molecular weight, or average molecular weight, of 800 to 4000 or preferably in the order of 1900 to 2100.

In the mixture of diols, the optimum weight ratio between polyether diol and polyester diol is within the range from 1/4 to 4/1.

In the preparation of the intermediate prepolymer, 1-1.5 moles of organic diisocyanate are reacted with 0.5 moles of the diol mixture for 2 - 3 hours at a temperature of 50-90°C, in the absence of solvent.

The prepolymer is reacted in an organic solvent, preferably N,N-dimethyl-formamide (DMF), at a temperature of 30 - 80°C, gradually adding the DMF solution of extender in the presence of an aliphatic monoamine, especially N-dibutylamine, in quantities in the order of 10-100 moles to every 100 moles of diamine.

According to the process of the present invention, the microfibrous base of polyethylene terephthalate or polyamide-6 is impregnated by immersion in the polyurethane elastomer solution. The impregnated matrix is then squeezed by passing it through a pair of rollers and then it is coagulated in water at a temperature within the range from 20 to 50°C.

The coagulated sheet thus obtained is treated with hot water (80°C) to remove solvent residues and polyvinyl alcohol. Next it is dried and, finally,cut into strips of thickness 0.8 - 1.5 mm. The raw synthetic microfibrous non-woven fabric is then buffed to give it a suede finish. The suede synthetic microfibrous non-woven fabric is given a dying treatment, dried and given a final finish.

### POLYETHYLENE TEREPHTHALATE MICROFIBRE BASED SUEDE PRODUCTS

The method according to the present invention makes possible the dying of the polyurethane the same colour as the fibre, givig a manufactured product dyed in both its components in bright colours, such as bright red, without revealing the white spotting of the polyurethane, with excellent colour-fastness (fast in light, on washing and wear resistant).

The dying of the material is done with dyes for polystyrene and dyes for polyurethane of identical colour, so as to dye both components.

Polyurethane can be dyed with dyes for wool and polyamides, i.e. acid and/or premetallized dyes; polyethylene terephthalate microfibres are dyed with disperse dyes.

After dying, polyester fibres usually undergo a reducing treatment (sodium hydroxide + sodium hydrosulphite) to remove not fixed dye, thus avoiding bleeding of excess dye.

An alternative to this type of "cleaning" is washing with solvent, e.g. trichloroethylene, or washing in a detergent solution of surface active agents or soap.

According to the process of the present invention, dying of polyethylene terephthalate fibres and of polyurethane can take place simultaneously (in the same bath) or in succession (in separate baths). Carrying out the dying operation on the synthetic microfibrous non-woven fabric with the two colourants simultaneously gives a manufactured product without specking (example 2), with not great dye fastness in the wash, but enough to allow the product to be used in certain sectors i.e. drapes, upholstery and tapestry.

The examples 3 to 16 concern dyeing tests carried out by varying some of the operating conditions. Uniformly coloured products were obtained, but without any increase in washing dye-fastness.

In some cases the final reduction cleaning treatment could be omitted, always taking account of the use to which the product is to be put, which should be such to permit slightly lower washing colour-fastness. The method according to the present invention, as has been already stated, also provides for the dying to be done in two separate operations, in each of which one type of fibre is dyed. The preferred embodiment of this method treats the various materials in the following order: treatment of polyethylene terephthalate (with dispersed colours), reduction of the excess colourant, rinsing, dying the polyurethane with acid and/or premetallized dyes.

In this way a coloured material was obtained with good washing dye-fastness and without specking. The results of the tests 17 to 27 together with the operating conditions used are listed in Table 2.

From it, there is evidence that in certain specific conditions optimum dye-fastness and complete freedom from specking can be achieved. It was also noted that an increase in the concentration of polyurethane dye reduces the washing dye-fastness (Example 19) as does a low pH (Example 20) and high operating temperature (Example 25, 26, 27).

This phenomenon in the first two cases can be attributed to characteristics of the acid/pre-metallized dyes, whose dying intensity increases with increasing ambient acidity; to the absorbing power of polyurethane, which retains even non-reacted dye; and finally, to the tendency of disperse dyes to migrate from the polyethylene terephthalate to the polyurethane, which increases with increasing temperature.

To further improve the method according to the present invention the dying operation was followed by a fixing process. The fixing treatment consisted of tartar emetic (antimony potassium tartrate). The test mode for the entire process according to the present invention is that of example 28, whose conditions gave a product without specking and with washing colour-fastness very close to 5. Because the invention polyurethane contains, besides weakly acidic amido hydrogens also tertiary nitrogens with a free electron doublet, it can be dyed with reactive dyes. The use of a reactive class of dyes allows the formation of a covalent bond between polyurethane substrate and dye molecule. The different type of interaction between dye and polyurethane - ionic bond with the acids and pre-metallized; covalent bond with reactive dyes - results in different behaviours of the dyed substrate with regard to washing dye-fastness especially in soap and water. In fact, the synthetic non-woven fabric composed of polyethylene terephthalate microfibres impregnated with a polyurethane elastomer solution where the polyurethane is dyed with reactive colourants always gives maximum washing dye-fastness. In this case too, the dying operation on the polyethylene terephthalate microfibres and on the polyurethane can be carried out simultaneously (in a sigle bath) or separately (in two successive baths). By simultaneously carrying out the dying operation on the non-woven fabric using both types of dyes (disperse for polyethylene terephthalate, reactive for polyurethane) materials free from specking are obtained, but this requires a larger quantity of reactive dye compared to the two-stage process because some is destroyed in the stripping. On the other hand the two-stage process adds about two hours to the dying process time.

The process by which polyethylene terephthalate and polyurethane are dyed simultaneously entails :
1) dying polyethylene terephthalate fibres and polyurethane at a temperature of between 110 and 130°C;
2) reduction of the excess dye;
3) rinsing.

The two-stage process requires the following procedures :
1) dying the polyethylene terephthalate fibres with disperse dyes;
2) reduction of the excess dye;
3) rinsing;
4) dying the polyurethane with reactive dyes in which the pH is increased from 5-6 to 8-9 and finally to 11-12 (T = 50-60°C);
5) washing with soap and water to remove the excess dye;
6) rinsing.

### SUEDE-TYPE PRODUCTS BASED ON NYLON 6 MICROFIBRES

The dying process for this material involves a single operation for both nylon and polyurethane components. Suitable dyes are of the acid/pre-metallized type or of the reactive type.

The final product is colored tone on tone because polyurethane and nylon microfibres absorb dye in the same way.

Products dyed with acid/pre-metallized dyes give poorer results for washing color-fastness for both wet and dry cleaning, but optimum results for light-fastness.

The washing colour-fastness performance of products dyed with reactive dyes is better, even though more dye is required compared to acid/pre-metallized dyes because the reactive class of dyes tend to react with the water in the dye-bath.

The invention will now be further disclosed with reference to the following illustrative but not limiting examples, where examples 1 and 49 refer to the preparation (product + dye) of a traditional synthetic suede fabric, with polyester and polyamide microfibres respectively, and the remaining examples relate to a product with polyurethane according to the invention.

The characteristics of the products are recited in Tables 1-5.

In all the examples which follow, the dying tests were carried out in containers for laboratory "jet" dying operating under pressure, capable of being heated to temperatures of 140°C, containing 150 litres of solution, fitted with indicators for pressure, temperature and circulation speed; circulation pumps, steam-heating system and a programmer for automatic operation of the pre-set dying cycle (operating time and temperature).

The following criteria were adopted to obtain the data reported in the tables :

Dye light-fastness 160 h FADEOMETER : evaluation based on the grey tones and determined according to Procedure AATCC16A.

Dry cleaning colour-fastness : arbitrary scale from 1 to 5 according to Procedure AATCC-132.

Wet washing colour-fastness : arbitrary scale from 1 to 5 according to Procedure AATCC-61.

### EXAMPLE 1

A staple fibre is prepared from polyethylene terephthalate microfibres (islands) (0.10 - 0.11 denier) in a polystyrene matrix (sea) having the following characteristics:
3.8 denier, length 51 mm, 5 crimps/cm, draft ratio 2.5 :1.

In particular, the fibre consisted of 57 parts by weight of polyethylene terephthalate microfibres, 40 parts by weight of polystyrene matrix, and 3 parts by weight of polyethylene glycol, the latter embedded in the polystyrene matrix. The fibre in cross-section shows 16 microfibres (islands) of polyethylene terephthalate embedded in the polystyrene matrix (sea).

The staple fibre is used to prepare a raw felt, which is subjected to a needle-punching process, to form a punched felt of 0.200 g/cm³ density. The punched felt was immersed in an aqueous solution of 20% by weight of polyvinyl alcohol and dried. The punched felt thus treated is then immersed in perchloroethylene until all the polystyrene matrix of the fibre is completely dissolved, with consequent formation of a polyethylene terephthalate microfibre base. This microfibre base is then dried.

A polyurethane elastomer is prepared separately, in the form of a solution in N,N dimethyl formamide according to the following way. In the first stage (prepolymerization) diphenylmethane-4,4'-diisocyanate is reacted with a mixture of diols formed by polytetramethyleneoxide diol with average molecular weight of 2026, and polycaprolactone diol with average molecular weight of 1993, with formation of a prepolymer intermediate with isocyanate chain ends. In detail, the first stage reaction time is about 3 hours at a temperature of about 65°C, reacting 1.0 mole of diphenylmethane-4,4'-diisocyanate and 0.5 moles of the diol mixture in which the ratio by weight of polytetramethyleneoxide diol to polycaprolactone diol is 3:1. The prepolymer thus obtained is dissolved in N,N dimethylformamide (DMF) to form a 25% by weight solution. Further, a 25% by weight DMF solution is prepared containing 0.41 moles of diphenylmethane-4,4'-diamine and 0.18 moles of N,N-dibutylamine. This solution is added to the prepolymer solution for a time of 30 minutes at a temperature of 40°C, to form the polyurethane elastomer in the form of a 25% by weight DMF solution. The polyurethane elastomer solution is further diluted with N,N dimethyl formamide to give a 13% by weight solution.

An amount of carbon-black within the range from 0.30 to 0.05% by weight of the dry polyurethane is added to the polyurethane elastomer solution.

The microfibre base, prepared as above disclosed, is immersed in the polyurethane elastomer solution and the non-woven fabric thus impregnated is wrung between two rollers and subsequently steeped in a water bath at 40°C for 1 hour. A coagulated sheet is thus obtained which is passed through a water bath at 80°C to extract the solvent residue and the polyvinyl alcohol. After drying, the composite microfibre sheet thus obtained is cut into strips of 1.0 mm thickness, and the strips are buffed to raise the microfibre "hair".

A raw microfibrous non-woven fabric is thus obtained which is 0.8 mm thick. It is dyed in a jet apparatus with venturi nozzles. Disperse dyes for polyethylene terephthalate Rubino Palanil FL and Rosso Terosil 59 (respectively Disperse Red 73 and 50 of the Color Index) up to 10% by weight of the material to be dyed, the dispersing agent and equaliser (concentration of 0.5 g/l), and acetic acid to bring the pH to about 5, are added to the jet at ambient temperature with enough water to fill it.

All the components are evenly dispersed by circulating water through the jet (closed circuit) for about 10 minutes. Five metres of the non-woven fabric produced as above disclosed are introduced and the dying cycle is started. The bath is heated at a rate of 2°C/min to 120°C, then maintained at 120°C for about 45 minutes. The material is then subjected to a reduction process with sodium hydrosulphite (3% by weight of the non-woven fabric) at about pH 11 by NaOH for 20 minutes at a temperature of 80°C. The bath is then cooled and washed for a long time with running water. The material taken from the jet is dried in a hot-air oven.

A bright red material is thus obtained, characterized by strong bright spotting among the surface fibres (heavy specking).

### EXAMPLE 2

The procedure for Example 1 is followed to the point where the polyethylene terephthalate microfibre base is obtained. The polyurethane elastomer differs in that the polycaprolactone diol is substituted by a polyester obtained by reacting adipic acid and N-methyl-diethanolamine, with an average molecular weight of 2011.

The rest the procedure is the same as in Example 1 and a synthetic microfibrous non-woven fabric is obtained which is subjected to a dying process repeating the procedure of Example 1 and introducing from the beginning an amount of acid/pre-metallized dye for the polyurethane, i.e. Rosso Avilon 3B (Acid Red 225 of the Color Index), equal to 0.5% by weight of the material to be dyed. The other conditions are the same as in Example 1, including the reduction washing.

The resulting product is uniformly coloured, without specking between the fibres.

Colour-fastness to washing and dry cleaning (tested according to AATCC norms) was 5 for tone change and 2-3 for dye bleeding.

### EXAMPLES 3 to 16

The material subjected to the dying process is the same as that in Example 2; in practice the polyurethane used was that formed by reacting Adipic acid with N-methyl-diethanolamine.

With the apparatus of the previous examples, keeping constant
a) type and concentration of dispersed dyes
b) type and concentration of dispersant and equalizers
c) type of reduction cleaning
the conditions are varied to find the best conditions for colour-fastness, especially on washing.

The experimental conditions applied are indicated in Table 1.

In every case the product obtained was coloured uniformly and, thus, had no specking. No improvements in the washing colour-fastness were reported.

### EXAMPLES 17 to 27

The material subjected to the dying process is the same as that in Example 2. In practice the dying process was divided into two phases.

The jet was first loaded with the dyes for polyethylene terephthalate and the necessary additives and the microfibre base was dyed as described in Example 1.

Then the reduction process was carried out with sodium hydrosulphite (6% by weight of the material to be dyed) in alkaline medium by sodium hydroxide and then pre-metallized dye was added, after rinsing, for the dying of the polyurethane.

The conditions for the dying of polyethylene terephthalate and the reduction were maintained constant; those for the polyurethane were varied as indicated in Table 2.

Dry cleaning was carried out in accordance with AATCC 85-1968; the value 5 indicates maximum colour-fastness.

In relation to specking, the value 5 refers to the complete absence of specking among the fibres, while a value of 0 indicates maximum specking.

It is evident from the data that, for low concentrations of pre-metallized dye, moderate conditions of pH and temperature, good washing colour-fastness without specking was obtained.

### EXAMPLE 28

The procedure is the same as for Example 22, i.e. successive dying the polyethylene terephthalate according to example 2, reducing the excess dye, and dying the polyurethane according to example 22, then fixing the dye on the polyurethane with tartar emetic at 80°C for 20 minutes.

Various concentrations of tartar emetic were tested from 1 to 10% (by weight of material to be dyed) and best concentrations (preventing colour bleeding, but not giving specking) were found to be from 2 to 6%. A material was obtained at a concentration of 4% with dry cleaning colour-fastness of 4.5 and completely free of specking.

### EXAMPLE 29

The procedure is the same as Example 2 up to the point of obtaining the polyurethane impregnated non-woven fabric. The thus obtained synthetic microfibrous non-woven fabric is subjected to dying according to Example 1 procedure, introducing from the beginning reactive dyes for polyurethane - ROSSO LEVAFIX E-6BA - in quantity by weight 3% of the material to be dyed. The remainder of the procedure is the same as for Example 1, including the reduction cleaning.

The final product was uniformly coloured, without specking between the fibres. The dry cleaning and washing colour-fastness (according to AATCC norms) were equal to 5 for tone change and equal to 5 for colour bleeding.

### EXAMPLES 30 to 39

The materials subjected to the dying process are the same as those in Example 29. The experimental conditions are as described in Table 3. In general, the final product was uniformly coloured (or almost so) and free of specking except in some cases (Examples 35, 37 and 39).

### EXAMPLES 40 to 48

In this case the materials subjected to the dying process are the same as those in Example 2.

In practice, the dying was divided into two stages. First, the jet was loaded with the polyethylene terephthalate dyes and the necessary additives and the microfibre dying procedure according to Example 1 was followed.

Then hydrosulphite reduction (6% by weight of the material to be dyed) was carried out in NaOH alkaline medium. After rinsing, reactive dyes for polyurethane were introduced. Operating conditions for polyethylene terephthalate dying and for the reduction are maintained constant. The polyurethane dying provides the following steps :
1) heating of dye to 60°C for 10 minutes
2) adding Na₂SO₄ at 60°C for 20 minutes
3) adding Na₂CO₃ (50 g/l) to pH of about 9 at 60°C for 20 minutes
4) adding NaOH (2 g/l) to pH of about 12 at 60°C for 30 minutes
5) draining the bath
6) washing with CH₃COOH (2 g/l) at 70°C for 15 minutes
7) washing with LEVAPON AN (2 g/l) at 70°C for 20 minutes In Examples 14 to 48 the concentrations of the reactive dye and the Na₂SO₄ amounts were varied. The experimental conditions are as described in Table 4.

### EXAMPLE 49

A staple fibre is prepared from nylon 6 microfibre (0.10 - 0.11 denier) in a polystyrene matrix, the staple fiber having the following characteritics:
3.8 denier, length 51 mm, 5 crimps/cm, draft ratio 2.5 :1.

The fibre consisted of 57 parts by weight of Nylon 6 microfibre, 40 parts by weight of polystyrene matrix.

The staple in cross-section shows 16 microfibres (islands) of Nylon 6 embedded in the polystyrene matrix.

The staple fibre is used to prepare a raw felt, which was subjected to a needle-punching process, to form a punched felt of 0.200 g/cm³ density. The punched felt was immersed in an aqueous solution of 20% by weight of polyvinyl alcohol and was then dried. The thus treated felt was then immersed in perchloroethylene until all the polystyrene matrix of the fibre was completely dissolved, with formation of a Nylon 6 microfibre base. This microfibre base is then dried.

A polyurethane elastomer is prepared separately, in the form of a solution of N,N dimethyl formamide treated in the following manner. In the first stage (prepolymerization) dicyclohexylmethane-4,4'-diisocyanate is reacted with a mixture of diols formed by polytetramethyleneoxide diol with average molecular weight of 1995, and polyester diol consisting of polycaprolactone formation of a prepolymer intermediate with isocyanate chain ends. In detail, the first stage reaction time is about 3 hours at a temperature of about 65°C, reacting 1.0 mole of dicyclohexylmethane-4,4'-diisocyanate and 0.5 moles of 3-isocyanate-methyl-3,5,5-trimethyl-cyclohexyl isocyanate (VII) with 0.5 moles of the diol mixture in which the ratio by weight of polytetramethyleneoxide diol to polycaprolactone diol is 1:1. The prepolymer thus obtained is dissolved in N,N dimethyl formamide to form a 25% by weight solution. Further, a 25% by weight DMF solution is prepared, containing 0.44 moles of dicyclohexylmethane-4,4'-diamine and 0.5 moles of 3-aminomethyl-3,5,5-trimethyl-cyclohexylamine and 0.12 moles of N,N-dibutylamine. This solution is added to the prepolymer solution for a time of 30 minutes at a temperature of 40°C, to form the polyurethane elastomer in the form of a 25% by weight DMF solution. The polyurethane elastomer solution is diluted with DMF to give a 13% by weight solution.

The microfibre base, prepared as above disclosed, is immersed in the polyurethane elastomer solution and the non-woven fabric thus impregnated is wrung between two rollers and subsequently steeped in a water bath at 40°C for 1 hour. The thus obtained coagulated sheet is passed through a water bath at 80°C to extract the solvent residue and the polyvinyl alcohol. After drying, the composite microfibre sheet thus obtained is cut into strips of 1.0 mm thickness, and the strips are buffed to raise the "hair" of the microfibre.

A raw microfibrous non-woven fabric is thus obtained which is 0.8 mm thick. It is dyed in a jet apparatus with venturi nozzles. Pre-metallized dyes GIALLO LANASAN CF-8 up to 10% by weight of the material to be dyed, the dispersing agent and equaliser, acetic acid to bring the pH to about 5, are added to the jet at ambient temperature with enough water to fill it.

All the components are evenly dispersed by circulating them through the water jet (closed circuit) for about 10 minutes. Five metres of the non-woven fabric produced as above are introduced and the heating cycle is started at a rate of 2°C/min to 98°C, then maintained for about 60 minutes.

The material is then washed with acetic acid (2 g/l) for 20 minutes at a temperature of 40°C.

The bath is then cooled and washed for a long time with running water. The material taken from the jet is dried in a hot-air oven.

### EXAMPLES 50 to 60

The material subjected to the dying process is the same as that in Example 49 except for the use of a polyester that in Example 49 except for the use of a polyester formed by reacting Adipic acid with N-methyl-diethanolamine, with average molecular weight of 2000, in place of the polycaprolactone diol with average molecular weight of 2002.

Thanks to the use of this modified polyester, the examples 50 to 60 required 50% less dye to give the same intensity of tone. The latter was measured with a spectraphotometer. In these examples the pH, the temperature and the dye concentration were varied.

From Table 5 it can be seen that low concentrations of pre-metallized dye and moderate pH and temperature, good washing colour-fastness and good light fastness were obtained.

### EXAMPLE 61

The procedure is the same as Examples 50 to 60 up to the point of obtaining the synthetic microfibrous non-woven fabric with thickness of 0.8 mm, which is subjected to a dying operation in the jet apparatus with venturi nozzles. Reactive dyes for Nylon 6, ROSSO LEVAFIX E-6BA 6% by weight of the material to be dyed, the dispersing agent and equaliser, Na₂SO₄ and NaOH to bring the pH to about 12, are added to the jet at ambient temperature with enough water to fill it.

All the components are evenly dispersed by circulating homogenous colouring of both the Nylon 6 part and the polyurethane part. The results are reported in Table 4. The results were evaluated according to :

Dye light-fastness 160 h FADEOMETER: evaluated on a grey scale determined according to the method AATCC 16A. Specking: arbitrary scale from 1 to 5.

Dry-cleaning colour-fastness : arbitrary scale from 1 to 5 determined according to the method AATCC-132.

Washing colour-fastness :arbitrary scale from 1 to 5 determined according to the method AATCC-61.

**TABLE 1**

| Test | Temp(°C) | pH | Conc(%) Rosso Avillon | Time(min) | Colour-fastness Dry-cleaning | Colour-fastness Washing | Light-fatness Dye | Heating Speed (°C) | Specking |
|---|---|---|---|---|---|---|---|---|---|
| 1 | 120 | 5 | 0 | 45 | 5 | 4/5 | 3 | 2 | 3/4 |
| 2 | 120 | 5 | 0,5 | 45 | 4 | 2/3 | 3/4 | 2 | 5 |
| 3 | 115 | 5 | 0,5 | 45 | 3/4 | 2/3 | 3/4 | 2 | 5 |
| 4 | 120 | 5 | 0,5 | 45 | 4 | 2/3 | 3/4 | 2 | 5 |
| 5 | 125 | 5 | 0,5 | 45 | 4 | 3 | 3/4 | 2 | 5 |
| 6 | 130 | 5 | 0,5 | 45 | 4 | 3 | 3/4 | 2 | 5 |
| 7 | 120 | 4 | 0,5 | 45 | 3/4 | 2/3 | 3/4 | 2 | 5 |
| 8 | 120 | 6 | 0,5 | 45 | 3/4 | 2/3 | 3/4 | 2 | 5 |
| 9 | 120 | 7 | 0,5 | 45 | 3/4 | 2/3 | 3/4 | 2 | 5 |
| 10 | 120 | 5 | 0,3 | 45 | 4/5 | 3/4 | 4 | 2 | 4 |
| 11 | 120 | 5 | 0,5 | 45 | 3/4 | 2/3 | 4 | 2 | 5 |
| 12 | 120 | 5 | 1 | 45 | 3/4 | 2 | 3 | 2 | 5 |
| 13 | 120 | 5 | 0,5 | 30 | 3 | 2 | 3/4 | 2 | 4 |
| 14 | 120 | 5 | 0,5 | 60 | 4 | 2/3 | 3/4 | 2 | 5 |
| 15 | 120 | 5 | 0,5 | 45 | 3 | 2/3 | 3/4 | 1 | 5 |
| 16 | 120 | 5 | 0,5 | 45 | 3 | 2/3 | 3/4 | 1,5 | 5 |

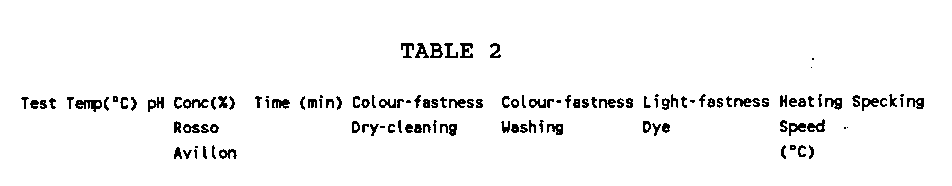

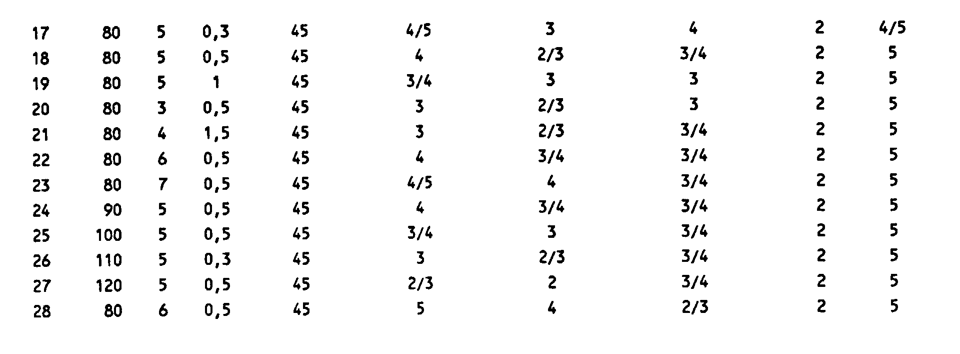

**TABLE 3**

| Test | Temp(°C) | pH | Conc(%) Rosso Levafix | Time(min) | Colour-fastness Dry-cleaning | Colour-fastness Washing | Light-fastness Dye | Heating Speed (°C) | Specking |
|---|---|---|---|---|---|---|---|---|---|
| 29 | 120 | 5 | 3 | 45 | 5 | 5 | 3/4 | 2 | 4/5 |
| 30 | 110 | 5 | 3 | 45 | 5 | 5 | 3/4 | 2 | 4/5 |
| 31 | 115 | 5 | 3 | 45 | 5 | 5 | 3/4 | 2 | 4/5 |
| 32 | 125 | 5 | 3 | 45 | 5 | 5 | 3/4 | 2 | 4/5 |
| 33 | 130 | 5 | 3 | 45 | 5 | 5 | 3/4 | 2 | 4/5 |
| 34 | 120 | 4 | 3 | 45 | 5 | 5 | 3/4 | 2 | 4/5 |
| 35 | 120 | 6 | 3 | 45 | 5 | 5 | 3/4 | 2 | 4/5 |
| 36 | 120 | 5 | 4 | 45 | 5 | 4/5 | 4 | 2 | 4/5 |
| 37 | 120 | 5 | 2 | 45 | 5 | 5 | 3/4 | 2 | 4 |
| 38 | 120 | 5 | 3 | 60 | 5 | 5 | 3/4 | 2 | 4/5 |
| 39 | 120 | 5 | 3 | 30 | 5 | 5 | 3/4 | 2 | 4/5 |

**TABLE 4**

| Test | Temp(°C) | pH | Conc(%) Rosso Levafix | Time(min) | Colour-fastness Dry-cleaning | Colour-fastness Washing | Lightfastness Dye | Heating Speed (°C) | Specking |
|---|---|---|---|---|---|---|---|---|---|
| 40 | 60 | | 3 | 80 | 4/5 | 4/5 | 3/4 | 2 | 5 |
| 41 | 60 | | 3 | 80 | 5 | 4/5 | 3/4 | 2 | 5 |
| 42 | 60 | | 3 | 80 | 5 | 5 | 4 | 2 | 5 |
| 43 | 60 | | 3 | 80 | 5 | 5 | 4 | 2 | 4 |
| 44 | 60 | | 3 | 20 | 5 | 5 | 4 | 2 | 3 |
| 45 | 60 | | 3 | 40 | 5 | 5 | 4 | 2 | 3/4 |
| 46 | 60 | | 3 | 120 | 5 | 5 | 4 | 2 | 5 |
| 47 | 60 | | 4 | 160 | 5 | 5 | 4 | 2 | 5 |
| 48 | 60 | | 2 | 200 | 5 | 5 | 4 | 2 | 5 |
| 61 | 80 | | 6 | 120 | 5 | 5 | 4 | 2 | 5 |

**TABLE 5**

| Test | Temp(°C) | pH | Conc(%) Bright Yellow Lanasan CFB | Colour-fastness Dry-cleaning | Colour-fastness Washing | Lightfastness Dye | Heating Speed (°C) |
|---|---|---|---|---|---|---|---|
| 49 | 98 | 5 | 10 | 4 | 2 | 3 | 2 |
| 50 | 110 | 5 | 5 | 4 | 2/3 | 3 | 2 |
| 51 | 120 | 5 | 5 | 4 | 2/3 | 3 | 2 |
| 52 | 80 | 5 | 5 | 4 | 2/3 | 3 | 2 |
| 53 | 98 | 4 | 5 | 3/4 | 1/2 | 3/4 | 2 |
| 54 | 60 | 3 | 5 | 3 | 1/2 | 3/4 | 2 |
| 55 | 60 | 2 | 5 | 2/3 | 1 | 3/4 | 2 |
| 56 | 60 | 5 | 10 | 3 | 1 | 3/4 | 2 |
| 57 | 60 | 5 | 20 | 2 | 0/1 | 3/4 | 2 |
| 58 | 60 | 5 | 2,5 | 4 | 3 | 3 | 2 |
| 59 | 60 | 5 | 1 | 4/5 | 3/4 | 3 | 2 |
| 60 | 60 | 5 | 0,5 | 4/5 | 4 | 2/3 | 2 |

### EXAMPLE 62

Synthesis of polyester diol from adipic acid and N-Methyl diethanolamine.

Into a 150 l stainless steel reaction vessel equipped with stirrer, diathermic oil heating system, nitrogen flushing and vacuum connection, and maintained at a temperature of 130°C the following mixture is fed :
30,6 Kg of 1,4 butandiol
56,7 Kg of adipic acid
10,8 Kg of N-methyl diethanolamine
and, later
56,7 g of titanium tetrabutylate
20,0 Kg of 1,4 butandiol

The mixture is stirred and the temperature is raised under vacuum. After 2.5 hours the system was brought to 210°C. This temperature is maintained for 16 hours, under stirring, and the initial vacuum of 250 mbar is raised to 580 mbar. At the end of the reaction a polyester is obtained with the following characteristics:

| | |
|---|---|
| OH number | 85,0 mg KOH/g |
| Acidity | 2,5 mg KOH/g |
| Alkalinity | 55,3 mg KOH/g |
| n 50°C | 660,0 cst |
| free 1,4 butandiol | 0,8% |
| free N-methyl diethanolamine | 0,7% |

More generally, the bicarboxylic acid is reacted with a mixture of 40 - 95% by weight of C₂-C₁₂ aliphatic diol or triol and 5-6% of a diol of above disclosed formula IV. The following table show some of the mechanico-physical characteristics of the polyurethane-polyurea obtained from the polycaprolactone diol (PU/PCL), from reaction of diisocyanate with Formula IV amines (PU/diethanolamine), and from polyester adipic acid + N-methyl diethanolamine (PU/ECP).

**TABLE 6**

| AROMATIC | PU/PCL | PU/ECP | PU/diethanolamine |
|---|---|---|---|
| Toughness Kg/cm² | 460 | 430 | 490 |
| 100 Modulus Kg/cm² | 38 | 32 | 42 |
| 300 Modulus Kg/cm² | 70 | 65 | 77 |
| Extensibility % | 800 | 830 | 720 |
| | | | |
| ALIPHATIC | | | |
| | | | |
| Toughness Kg/cm² | 530 | 510 | 580 |
| 100 Modulus Kg/cm² | 48 | 48 | 51 |
| 300 Modulus Kg/cm² | 98 | 95 | 103 |
| Extensibility % | 620 | 640 | 540 |

### EXAMPLE 63

Syntesis of polyurethane from N-methyl-diethanolamine.

In the first step (prepolymerization) diphenylmethane-4,4'-diisocyanate is reacted with a diols mixture consisting of polytetramethyleneoxide diol having average molecular weight of 2025, polycaprolactone diol with average molecular weight 1993 and N-methyl-diethanolamine with molecular weight 119. An intermediate prepolymer having isocyanate chain ends is formed.

Namely, in said first step the reaction time is of about three hours, the reaction temperature is 65°C, and 1.0 moles of diphenylmethane-4,4'-diisocyanate are reacted with 0.5 moles of the diols mixture, wherein the ratio by weight of polytetramethyleneoxide to polycaprolactone and N-methyl-diethanolamine is 73%, 24% and 3%.

The thus obtained prepolymer is dissolved in DMF to obtain a 25% by weight solution.

Separately a DMF 25% by weight solution is prepared with 0.41 moles of diphenylmethane-4,4'-diamine and 0.18 moles of n,n-dibutylamine. This solution is added to the prepolymer solution in a time of 30 minutes, at a temperature of 40°C, in order to form the elastomeric polyurethane as a 25% by weight solution in DMF.

## Claims

1. A synthetic microfibrous non-woven fabric, of the suede-like type, comprising a microfibre matrix impregnated with a polyurethane polymer, characterized by that said polyurethane polymer has linear chain structure, which can give a polymer solution in an organic solvent and is obtained by chain extension from a prepolymer presenting a plurality of tertiary amine units of the formula 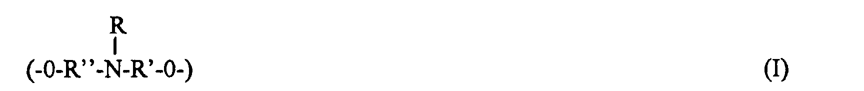 where R is an C₁-C₄ alkyl and R' and R", identical or different to each other, are C₁-C₄ alkylene.

2. A non-woven fabric according to claim 1, wherein the groups R' and R" of the tertiary amine unit are bonded to aromatic or aliphatic diisocyanates R"'(NCO)₂ with urethane links according to the formula

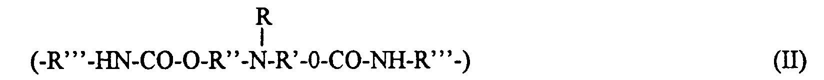

3. A non-woven fabric according to claim 1, wherein at least one of R' and R" groups of said tertiary amine units is bonded by ester bonds with a bicarboxylic acid according to the formula 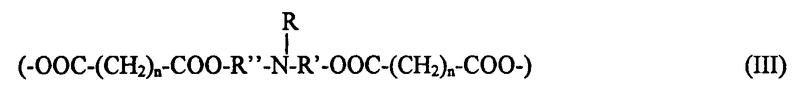 where n is 0 or an integer from 1 to 6.

4. A non-woven fabric according to claim 2, or 3, wherein R is methyl and R' and R" are ethyl.

5. A non-woven fabric according to claim 3, wherein n = 4.

6. A non-woven fabric according to any previous claim, wherein said tertiary amine units of formula (I) percentage is within the range from 5% to 15% by weight of the dry polyurethane polymer.

7. A non-woven fabric according to any previous claim, wherein said microfibres are 6- or 6'-6 polyamide.

8. A process for the preparation of a non-woven fabric comprising a microfibre matrix impregnated with a polyurethane polymer, said process comprising the steps of preparing separately a microfibre matrix and a polyurethane polymer solution, impregnating the said matrix with the said polyurethane polymer solution, coagulating said polymer, and the dying of the final raw product, characterized in that the said polyurethane polymer has a linear structure and is prepared by chain estension from a prepolymer presenting a plurality of tertiary amine units of the fomula 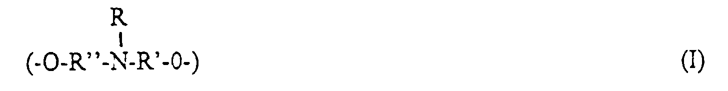 where R is an C₁-C₄ alkyl and R' and R'', identical or different to each other, are C₁-C₄ alkylene.

9. A process according to claim 8, wherein the insertion in the said polyurethane chain of said tertiary amine units is carried out by reacting in amine compound of the formula 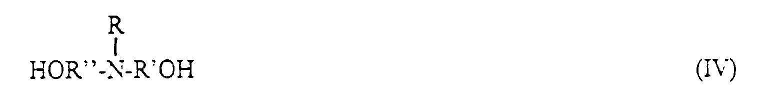 where R is an C₁-C₄ alkyl and R', R", identical or different to each other, are C₁-C₄ alkylene,
with known aromatic or aliphatic diisocyanates of formula R'''(NCO)₂ and with one or more diols, to give a prepolymer with isocyanate chain ends and with recurring units fo the formula 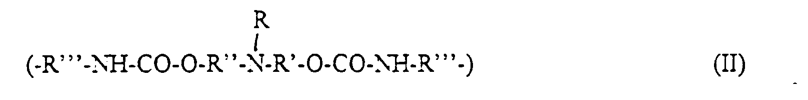 where R is an C₁-C₄ alkyl and R' and R", identical or different to each other are C₁-C₄ alkylenes,
and by successively extending said prepolymer to form the polyurethane polymer.

10. A process according to claim 8, wherein insertion in the said polyurethane chain of the said tertiary amine units is carried out by reacting a polyester diol having recurring units of the formula 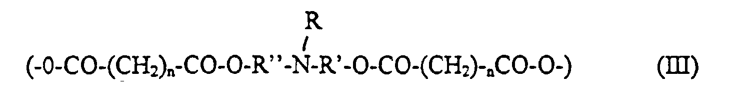 where R is an C₁-C₄ alkyl and R' and R", identical or different ot each other are C₁-C₄ alkylenes and n is 0 or an integer from 1 to 6,
with known aromatic or aliphatic diisocyanates of formula R"'(NCO)₂ to form a prepolymer with isocyanate chain ends and by successively extending the said prepolymer to form a polyurethane polymer.

11. A process according to any claim 8 to 10, wherein the thus obtained raw non-woven fabric is provided with polyester microfibrous matrix and is dyed by treatment with disperse dyes and acid and/or pre-metallized dyes and by a separate reduction treatment in alkaline medium.

12. A process according to claim 11, wherein the said treatment with dyes is effected in a single phase in a bath with pH between 4 and 7 and temperatures within the range from 110°C to 140°C; with concentration of said disperse dyes within the range from 2% to 12% by weight of the non-woven fabric and concentration of the acid/pre-metallized dyes within the range from 0.2% to 1.2% by wieght of the non-woven fabric; the reduction treatment in alkaline medium being effected by sodium hydrosulphite at a concentration of between 2% and 4% of the weight of the non-woven fabric.

13. A process according to claim 12, wherein the said non-woven fabric is dyed according to the following steps:
carrying out a first bath with pH between 4 and 6 at a temperature within the range from 110°C to 130°C; the concentration of said dispersed dyes being within the range from 0.2% to 1.5% by weight of the non-woven fabric;
carrying out a reduction treatment in alkaline medium with sodium hydrosulphite at a concentration within the range from 4% to 7% of the weight of the non-woven fabric;
carrying out a second bath with pH between 3 and 7 at a temperature within the range from 70°C to 110°C, the concentration of the acid and/or pre-metallized dyes being within the range from 0.2% to 1.5% by weight of the non-woven fabric.

14. A process according to claims 12 or 13, wherein reactive dyes at a concentration within the range from 2% to 4% of the weight of the non-woven fabric are used in place of the acid and/or pre-metallized dyes and wherein pH is within the range from 4 to 7 and temperature is within the range from 60°C to 130°C.

15. A process according to claim 12 or 13, further comprising the step of fixing the dyes on the polyurethane by means of treatment in a bath of tartar emetic at a concentration within the range from 2% to 6% of the weight of the non-woven fabric at a temperature within the range from 70°C to 90°C for a time period within the range from 15 to 30 minutes.

16. A process according to any claim 8 to 10, wherein the raw non-woven fabric is provided with polyamide microfibre matrix and is dyed by carrying out a single step treatment in a bath with pH between 2 and 5 and at a temperature within the range from 50°C to 130°C, with acid and/or pre-metallized dyes at a concentration within the range from 0.2% to 1.5% by weith of the non-woven fabric and by further separate reduction treatment in an alkaline medium.

17. A process according to claim 16, wherein reactive dyes are used in place of the said acid and/or pre-metallized dye, at a temperature within the range from 50°C to 80°C and at a pH in the range from 4 to 7, the said reactive dyes having concentration within the range from 2% to 10% of the weight of the non-woven fabric.

## Patentansprüche

1. Synthetischer Mikrofaservliesstoff vom Velourledertyp, umfassend eine Mikrofasermatrix, die mit einem Polyurethanpolymer imprägniert ist,
dadurch gekennzeichnet, daß das Polyurethanpolymer eine lineare Kettenstruktur aufweist, wobei das Polyurethanpolymer eine Polymerlösung in einem organischen Lösemittel ergeben kann und durch Kettenverlängerung aus einem Präpolymer erhalten werden kann, das eine Mehrzahl von tertiären Amineinheiten der Formel 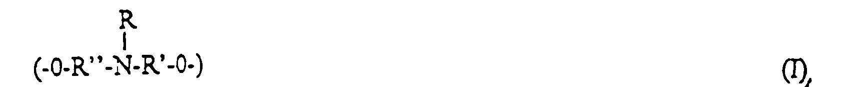 in der R ein C₁-C₄-Alkyl ist und R' und R", die gleich oder verschieden sind, C₁-C₄-Alkylen sind, aufweist.

2. Vliesstoff nach Anspruch 1,
wobei die Gruppen R' und R" der tertiären Amineinheit an aromatische oder aliphatische Diisocyanate R"'(NCO)₂ gebunden sind durch Urethanverknüpfungen entsprechend der Formel

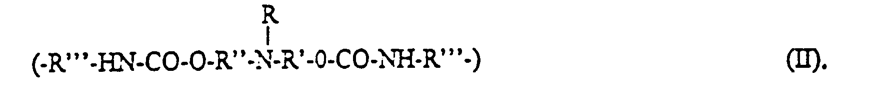

3. Vliesstoff nach Anspruch 1,
wobei mindestens eine der R'- und R"-Gruppen der tertiären Amineinheiten durch Esterbindungen an eine Dicarbonsäure entsprechend der Formel 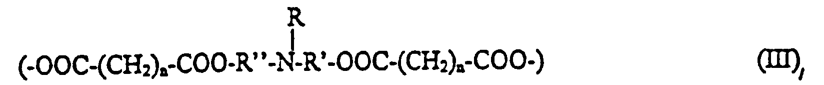 in der n 0 oder eine ganze Zahl von 1 bis 6 ist, gebunden ist.

4. Vliesstoff nach Anspruch 2 oder 3,
wobei R Methyl ist und R' und R" Ethyl sind.

5. Vliesstoff nach Anspruch 3,
wobei n = 4.

6. Vliesstoff nach einem der vorangegangenen Ansprüche,
wobei der Prozentsatz der tertiären Amineinheiten der Formel (I) im Bereich von 5 Gew.-% bis 15 Gew.-% bezogen auf das trockene Polyurethanpolymer liegt.

7. Vliesstoff nach einem der vorangegangenen Ansprüche,
wobei die Mikrofasern 6- oder 6'-6-Polyamid sind.

8. Verfahren zur Herstellung eines Vliesstoffs, umfassend eine Mikrofasermatrix, die mit einem Polyurethanpolymer imprägniert ist, wobei das Verfahren die Schritte umfaßt, separat eine Mikrofasermatrix und eine Polyurethanpolymerlösung herzustellen, die Matrix mit der Polyurethanpolymerlösung zu imprägnieren, das Polymer zu koagulieren und das zuletzt vorliegende Rohprodukt zu färben,
dadurch gekennzeichnet, daß das Polyurethanpolymer eine lineare Struktur hat und durch Kettenverlängerung aus einem Präpolymer hergestellt wird, das eine Mehrzahl von tertiären Amineinheiten der Formel 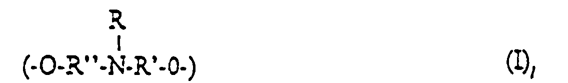 in der R ein C₁-C₄-Alkyl ist und R' und R", die gleich oder verschieden sind, C₁-C₄-Alkylen sind, aufweist.

9. Verfahren nach Anspruch 8,
wobei die Insertion der tertiären Amineinheiten in die Polyurethankette ausgeführt wird durch Umsetzen einer Aminverbindung der Formel 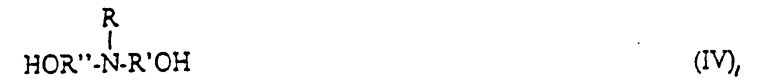 in der R ein C₁-C₄-Alkyl ist und R' und R", die gleich oder verschieden sind, C₁-C₄-Alkylen sind, mit bekannten aromatischen oder aliphatischen Diisocyanaten der Formel R"'(NCO)₂ und mit einem oder mehreren Diolen unter Bildung eines Präpolymers mit Isocyanat-Kettenenden und mit wiederkehrenden Einheiten der Formel 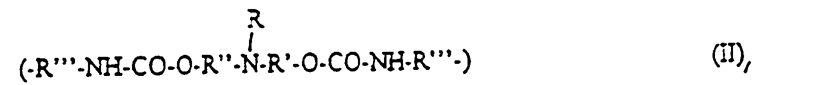 in der R ein C₁-C₄-Alkyl ist und R' und R", die gleich oder verschieden sind, C₁-C₄-Alkylene sind, und durch sukzessives Verlängern des Präpolymers unter Bildung des Polyurethanpolymers.

10. Verfahren nach Anspruch 8,
wobei die Insertion der tertiären Amineinheiten in die Polyurethankette ausgeführt wird durch Umsetzen eines Polyesterdiols mit wiederkehrenden Einheiten der Formel 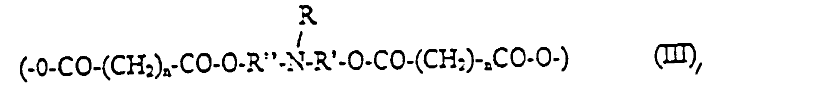 in der R ein C₁-C₄-Alkyl ist und R' und R", die gleich oder verschieden sind, C₁-C₄-Alkylene sind und n 0 oder eine ganze Zahl von 1 bis 6 ist,
mit bekannten aromatischen oder aliphatischen Diisocyanaten der Formel R"'(NCO)₂ unter Bildung eines Präpolymers mit Isocyanat-Kettenenden und durch sukzessives Verlängern des Präpolymers unter Bildung des Polyurethanpolymers.

11. Verfahren nach einem der Ansprüche 8 bis 10,
wobei der so erhaltene, rohe Vliesstoff mit einer Polyester-Mikrofasermatrix bereitgestellt wird und durch Behandlung mit Dispersionsfarbstoffen und Säurefarbstoffen und/oder vormetallisierten Farbstoffen und durch eine getrennte Reduktionsbehandlung in alkalischem Milieu gefärbt wird.

12. Verfahren nach Anspruch 11,
wobei die Behandlung mit Farbstoffen in einer einzigen Phase in einem Bad mit einem pH-Wert zwischen 4 und 7 und Temperaturen im Bereich von 110°C bis 140°C bei einer Konzentration der Dispersionsfarbstoffe im Bereich von 2 Gew.-% bis 12 Gew.-% bezogen auf den Vliesstoff und einer Konzentration der Säurefarbstoffe/vormetallisierten Farbstoffe im Bereich von 0,2 Gew.-% bis 1,2 Gew.-% bezogen auf den Vliesstoff bewirkt wird, wobei die Reduktionsbehandlung in alkalischem Milieu durch Natriumdithionit in einer Konzentration von zwischen 2% und 4% des Gewichts des Vliesstoffs ausgeführt wird.

13. Verfahren nach Anspruch 12,
wobei der Vliesstoff entsprechend den folgenden Schritten gefärbt wird:
Ausführen eines ersten Bads mit einem pH-Wert zwischen 4 und 6 bei einer Temperatur im Bereich von 110°C bis 130°C, wobei die Konzentration der Dispersionsfarbstoffe im Bereich von 0,2 Gew.-% bis 1,5 Gew.-% bezogen auf den Vliesstoff liegt,
Ausführen einer Reduktionsbehandlung in alkalischem Milieu mit Natriumdithionit bei einer Konzentration im Bereich von 4% bis 7% des Gewichts des Vliesstoffs,
Ausführen eines zweiten Bads mit einem pH-Wert zwischen 3 und 7 bei einer Temperatur im Bereich von 70°C bis 110°C, wobei die Konzentration der Säurefarbstoffe und/oder vormetallisierten Farbstoffe im Bereich von 0,2 Gew.-% bis 1,5 Gew.-% bezogen auf den Vliesstoff liegt.

14. Verfahren nach Anspruch 12 oder 13,
wobei Reaktionsfarbstoffe in einer Konzentration im Bereich von 2% bis 4% des Gewichts des Vliesstoffs anstelle der Säurefarbstoffe und/oder vormetallisierten Farbstoffe verwendet werden und wobei der pH-Wert im Bereich von 4 bis 7 und die Temperatur im Bereich von 60°C bis 130°C liegt.

15. Verfahren nach Anspruch 12 oder 13,
das ferner den Schritt umfaßt, die Farbstoffe an das Polyurethan anzuheften mittels einer Behandlung in einem Bad von Brechweinstein in einer Konzentration im Bereich von 2% bis 6% des Gewichts des Vliesstoffs bei einer Temperatur im Bereich von 70°C bis 90°C für eine Zeitdauer im Bereich von 15 bis 30 Minuten.

16. Verfahren nach einem der Ansprüche 8 bis 10,
wobei der rohe Vliesstoff mit einer Polyamid-Mikrofasermatrix bereitgestellt wird und durch Ausführen einer Einschrittbehandlung in einem Bad mit einem pH-Wert zwischen 2 und 5 und bei einer Temperatur im Bereich von 50°C bis 130°C mit Säurefarbstoffen und/oder vormetallisierten Farbstoffen in einer Konzentration im Bereich von 0,2 Gew.-% bis 1,5 Gew.-% bezogen auf den Vliesstoff und ferner durch separate Reduktionsbehandlung in alkalischem Milieu gefärbt wird.

17. Verfahren nach Anspruch 16,
wobei Reaktionsfarbstoffe anstelle des Säurefarbstoffs und/oder vormetallisierten Farbstoffs bei einer Temperatur im Bereich von 50°C bis 80°C und einem pH-Wert im Bereich von 4 bis 7 verwendet werden, wobei die Reaktionsfarbstoffe eine Konzentration im Bereich von 2% bis 10% des Gewichts des Vliesstoffs haben.

## Revendications

1. Tissu synthétique microfibreux non-tissé du type imitant le daim comprenant une matrice de microfibres imprégnée avec un polymère polyuréthane, caractérisé en ce que le polymère polyuréthane présente une structure linéaire qui peut produire une solution polymère dans un solvant organique et est obtenu par dépliement des chaînes d'un pré-polymère possédant une pluralité d'unités amines tertiaires de formule : 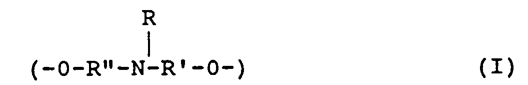 où R est un alkyle C₁-C₄ et R' et R" identiques ou différents l'un de l'autre, sont des alkylènes C₁-C₄.

2. Tissu non-tissé selon la revendication 1, dans lequel les groupes R' et R" de l'unité amine tertiaire sont liés à des diisocyanates R"'(NCO)₂ aromatiques ou aliphatiques par des liaisons uréthanes conformément à la formule

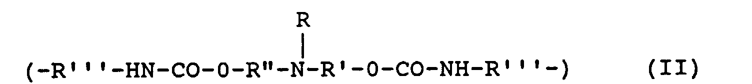

3. Tissu non-tissé selon la revendication 1, dans lequel l'un au moins des groupes R' et R" des unités amines tertiaires est lié par l'intermédiaire de liaisons esters avec un acide bicarboxylique conformément à la formule : 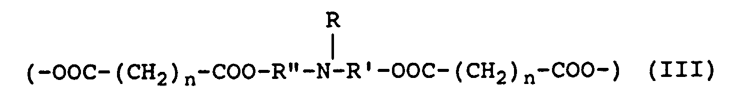 où n est nul ou correspondant à un nombre entier compris entre 1 et 6.

4. Tissu non-tissé selon l'une quelconque des revendications 2 ou 3, dans lequel R est le méthyle et R' et R" sont des éthyles.

5. Tissu non-tissé selon la revendication 3, dans lequel n = 4.

6. Tissu non-tissé selon l'une quelconque des revendications précédentes, dans lequel le pourcentage en unités amines tertiaires dans la formule (I) est situé dans l'intervalle compris entre 5% et 15% en poids du polymère polyuréthane sec.

7. Tissu non-tissé selon l'une quelconque des revendications précédentes, dans lequel les microfibres sont des polyamides 6- ou 6'-6.

8. Procédé de production d'un tissu non-tissé comportant une matrice de microfibres imprégnée avec un polymère polyuréthane, ce procédé comprenant les étapes qui consistent à préparer séparément une matrice de microfibres et une solution polymère de polyuréthane, à imprégner la matrice avec la solution polymère de polyuréthane, à coaguler le polymère puis à teindre le produit brut final, caractérisé en ce que le polymère polyuréthane présente une structure linéaire et est préparé par dépliement des chaînes d'un pré-polymère possédant une pluralité d'unités amines tertiaires de formule : 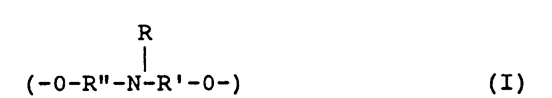 où R est un alkyle C₁-C₄ et R' et R", identiques ou différents l'un de l'autre, sont des alkylènes C₁-C₄.

9. Procédé selon la revendication 8, dans lequel l'insertion des unités amines tertiaires dans la chaîne polyuréthane est effectuée en faisant réagir un composé amine de formule : 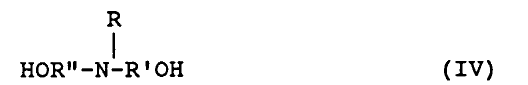 où R est un alkyle C₁-C₄ et R' et R", identiques ou différents l'un de l'autre, sont des alkylènes C₁-C₄, avec des diisocyanates aromatiques ou aliphatiques connus de formule R'''(NCO)₂ et avec un ou plusieurs diols, afin de produire un pré-polymère avec des terminaisons de chaîne isocyanates et avec des unités récurrentes de formule : 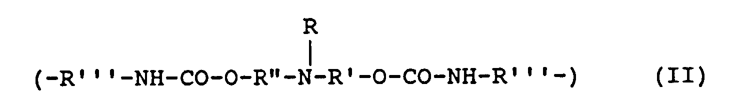 où R est un alkyle C₁-C₄ et R' et R", identiques ou différents l'un de l'autre, sont des alkylènes C₁-C₄,
et en allongeant successivement le pré-polymère pour former le polymère polyuréthane.

10. Procédé selon la revendication 8, dans lequel l'insertion des unités amines tertiaires dans la chaîne polyuréthane est effectuée en faisant réagir un diol polyester possédant des unités récurrentes de formule : 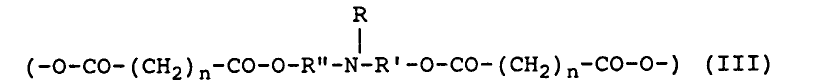 où R est un alkyle C₁-C₄ et R' et R", identiques ou différents l'un de l'autre, sont des alkylènes C₁-C₄ et n est nul ou correspondant à un nombre entier compris entre 1 et 6,
avec des diisocyanates aromatiques ou aliphatiques connus de formule R'''(NCO)₂ pour produire un pré-polymère avec des extrémités de chaîne isoxyanates et en allongeant successivement le pré-polymère pour former le polymère polyuréthane.

11. Procédé selon l'une quelconque des revendications 8 à 10, dans lequel le tissu non-tissé brut ainsi obtenu comporte une matrice microfibreuse polyester et est teint par traitement avec des colorants de dispersion et avec des colorants acides et/ou pré-métallisés ainsi que par traitement de réduction séparé dans un milieu alcalin.

12. Procédé selon la revendication 11, dans lequel le traitement par colorants est effectué en milieu monophasique dans un bain dont le pH est compris entre 4 et 7 et à des températures situées dans l'intervalle compris entre 110°C et 140°C, dont la concentration en colorants de dispersion est située dans l'intervalle compris entre 2 % et 12 % en poids du tissu non-tissé, et dont la concentration en colorants acides pré/métallisés est située dans l'intervalle compris entre 0,2 % et 1,2 % en poids du tissu non-tissé, le traitement de réduction en milieu alcalin étant réalisé à l'aide d'hydrosulfite de sodium à une concentration comprise entre 2 % et 4 % en poids du tissu non-tissé.

13. Procédé selon la revendication 12, dans lequel le tissu non-tissé est teint conformément aux étapes suivantes :
. réalisation d'un premier bain dont le pH est compris entre 4 et 6 à une température située dans l'intervalle compris entre 110°C et 130°C, la concentration en colorants de dispersion étant située dans l'intervalle compris entre 0,2 % et 1,5 % en poids du tissu non-tissé ;
. réalisation d'un traitement de réduction en milieu alcalin avec de l'hydrosulfite de sodium à une concentration située dans l'intervalle compris entre 4 % et 7 % en poids du tissu non-tissé ;
. réalisation d'un second bain dont le pH est compris entre 3 et 7 à une température située dans l'intervalle compris entre 70°C et 110°C, la concentration en colorants acides et/ou pré-métallisés étant située dans l'intervalle compris entre 0,2 % et 1,5 % en poids du tissu non-tissé.

14. Procédé selon l'une quelconque des revendications 12 ou 13, dans lequel des colorants réactifs à une concentration située dans l'intervalle compris entre 2 % et 4 % en poids du tissu non-tissé sont utilisés à la place des colorants acides et/ou pré-métallisés et dans lequel le pH est situé dans l'intervalle compris entre 4 et 7 et la température est située dans l'intervalle compris entre 60°C et 130°C.

15. Procédé selon l'une quelconque des revendications 12 ou 13, comprenant en outre l'étape consistant à fixer les colorants sur le polyuréthane par le biais d'un traitement dans un bain de stibiotartrate de potassium à une concentration située dans l'intervalle compris entre 2 % et 6 % en poids du tissu non-tissé, à une température située dans l'intervalle compris entre 70°C et 90°C, et pour une durée comprise entre 15 et 30 minutes.

16. Procédé selon l'une quelconque des revendications 8 à 10, dans lequel le tissu non-tissé brut comporte une matrice de microfibres polyamides et est teint par mise en oeuvre d'un traitement à une seule étape dans un bain de pH compris entre 2 et 5 et à une température située dans l'intervalle compris entre 50°C et 130°C, avec des colorants acides et/ou pré-métallisés à une concentration située dans l'intervalle compris entre 0,2 % et 1,5 % en poids du tissu non-tissé, et par un traitement ultérieur de réduction séparé en milieu alcalin.

17. Procédé selon la revendication 16, dans lequel les colorants réactifs sont utilisés en remplacement du colorant acide et/ou pré-métallisé, à une température située dans l'intervalle compris entre 50°C et 80°C et à pH compris entre 4 et 7, la concentration de ces colorants réactifs étant située dans l'intervalle compris entre 2 % et 10 % en poids du tissu non-tissé.
